Europäisches Patentamt

European Patent Office

Office européen des brevets

(19)

(11) **EP 1 023 796 B1**

(12) **FASCICULE DE BREVET EUROPEEN**

(45) Date de publication et mention
de la délivrance du brevet:
**21.12.2005 Bulletin 2005/51**

(21) Numéro de dépôt: **98950158.0**

(22) Date de dépôt: **19.10.1998**

(51) Int Cl.⁷: **H04L 12/28**

(86) Numéro de dépôt international:
**PCT/FR1998/002240**

(87) Numéro de publication internationale:
**WO 1999/021325 (29.04.1999 Gazette 1999/17)**

(54) **DISPOSITIF ET PROCEDE DE CONTROLE DANS UN RESEAU D'APPAREILS DOMESTIQUES**

STEUERUNGSVERFAHREN UND -EINRICHTUNG FÜR EIN NETZWERK MIT
HAUSHALTSGERÄTEN

CONTROL DEVICE AND METHOD IN A SYSTEM OF HOUSEHOLD APPLIANCES

(84) Etats contractants désignés:
**DE ES FR GB IT**

(30) Priorité: **17.10.1997 FR 9713023**

(43) Date de publication de la demande:
**02.08.2000 Bulletin 2000/31**

(73) Titulaire: **THOMSON multimedia**
**92100 Boulogne Billancourt (FR)**

(72) Inventeurs:
• **BATTINI, Fabien**
**F-92648 Boulogne Cedex (FR)**

• **GUERIN, Benoît**
**F-92648 Boulogne Cedex (FR)**

(74) Mandataire: **Kohrs, Martin et al**
**Thomson multimedia**
**46, quai A. Le Gallo**
**92648 Boulogne Cedex (FR)**

(56) Documents cités:
**EP-A- 0 626 635**

• **MARGOLIN B: "SMARTER STUFF" BYTE, vol.
22, no. 6, juin 1997, page 85, 87, 89, 91/92
XP000691560**

**Description**

L'invention concerne un dispositif et procédé de contrôle dans un réseau d'appareils domestiques.

Par appareil domestique, il faut entendre au moins un appareil domestique tel qu'un appareil vidéo et/ou audio (par exemple, un téléviseur, un magnétoscope, une chaîne haute fidélité, etc.) et/ou au moins un appareil électrique (par exemple, un four micro-onde, un réfrigérateur, un interrupteur, etc.).

Par contrôle d'un appareil domestique, il faut entendre la gestion de différentes informations telles que, par exemple, les informations permettant le réglage de l'appareil, les informations concernant le fonctionnement en cours de l'appareil, les informations concernant les caractéristiques techniques de l'appareil ou encore les consignes de sécurité à respecter.

Selon l'art connu, les informations concernant le réglage, les caractéristiques techniques et les consignes de sécurité d'un appareil sont contenues dans le fascicule imprimé que constitue son mode d'emploi. Une fois ces informations connues, l'utilisateur effectue le réglage de l'appareil en intervenant sur l'appareil lui-même soit directement, soit, dans certains cas, par l'intermédiaire d'une télécommande.

Les informations concernant le fonctionnement en cours d'un appareil s'affichent sur la face avant de celui-ci. A titre d'exemples non limitatifs, un lecteur de disques compacts affiche sur sa face avant le numéro de la plage du disque en train d'être lue, ou encore, un four micro-onde affiche la puissance sur laquelle il a été réglé.

Le contrôle d'un appareil domestique s'effectue donc à partir d'informations diverses que l'utilisateur met en oeuvre lors d'interventions multiples.

Lorsqu'un utilisateur souhaite faire fonctionner simultanément plusieurs appareils domestiques, il lui est alors nécessaire d'intervenir sur chacun d'eux. Le nombre d'interventions que l'utilisateur doit effectuer se trouve alors grandement accru, entraînant, par là même, de réels inconvénients. Ainsi, par exemple, un utilisateur qui désire enregistrer une émission de télévision reçue par un premier appareil sur un second appareil doit programmer séparément chacun des appareils.

Le document 'B. Margolin : « Smarter Stuff », Byte, Vol. 22, no. 6, juin 1997, page 85, 87, 89, 91/92' mentionne la gestion de dispositifs à travers l'Internet, basé sur des interfaces HTML. Le document EP 0 626 635 décrit un réseau d'appareils dans lequel les appareils transmettent un objet interface utilisateur à un dispositif d'affichage.

L'invention a pour objet un dispositif de contrôle dans un réseau d'appareils domestiques caractérisé en ce qu'à chaque appareil est associé un descriptif composé d'un ensemble de pages ou de fractions de pages de langage de marquage comportant des fonctions de contrôle dudit appareil, ledit dispositif comportant

- des moyens de chargement et de traitement de descriptifs associés aux appareils ;
- des moyens d'agrégation de fonctions de contrôle de même type de plusieurs descriptifs par reconnaissance des types de fonctions dans les descriptifs pour affichage des fonctions agrégées sur une seule page ou pour l'agrégation de plusieurs fractions de pages pour affichage des fractions de pages agrégées sur une seule page ;
- un générateur des graphismes nécessaires pour l'affichage des pages ou des fractions de pages agrégées.

Selon un exemple de réalisation particulier, les moyens d'affichage comprennent un téléviseur. Ces moyens peuvent également comprendre un moniteur vidéo, un écran LCD ou plasma, un affichage de type électrode luminescente ou un autre type d'affichage.

Les moyens de chargement et de traitement comprennent selon un exemple particulier, une interface IEEE 1394, un microprocesseur et une mémoire. Cependant, selon l'implémentation, notamment selon le type de bus de communication du réseau, l'interface peut être différente et notamment sans fil. D'autre part, le microprocesseur peut être remplacé par microcontrôleur ou un autre type de dispositif de traitement de données. De même, la mémoire peut être de type mémoire vive ou mémoire morte reprogrammable, selon le type d'utilisation envisagé.

Selon un mode de réalisation particulier, le descriptif est chargé directement à partir de l'appareil auquel il est associé, ledit descriptif étant stocké dans une mémoire de cet appareil.

Selon un mode de réalisation particulier, un descriptif est chargé à partir d'un serveur Internet, l'adresse du descriptif étant chargée à partir de l'appareil auquel le descriptif est associé.

Selon un mode de réalisation particulier, le dispositif comporte des moyens de création d'au moins une page de configuration d'appareils en tant que source et/ou récepteur de signaux pour permettre à l'utilisateur de spécifier les connexions entre appareils.

Selon un mode de réalisation particulier, le descriptif comporte au moins l'une des fonctions suivantes : affichage d'informations statiques relatives à l'appareil, affichage d'informations dynamiques relatives à l'appareil, affichage d'un objet pour la commande d'une fonction de l'appareil.

Selon un mode de réalisation particulier, lorsqu'un descriptif comporte un objet pour la commande d'une fonction d'un appareil, il comporte également un programme pour élaborer la commande correspondante à transmettre à l'appareil auquel est associé l'ensemble.

Selon un mode de réalisation particulier, ledit dispositif indique dans la ou les pages de configuration l'ensemble des configurations possibles.

L'invention a en outre pour objet un procédé de contrôle d'au moins un appareil dans un réseau de communication domestique comportant un dispositif de contrôle relié à un dispositif d'affichage, caractérisé en ce qu'à chaque appareil est associé un descriptif composé d'un ensemble de pages ou de fractions de pages de langage de marquage pour contrôler ledit appareil, le procédé comportant les étapes:

- de chargement, par ledit dispositif de contrôle, de descriptifs d'une pluralité d'appareils,
- de reconnaissance de fonctions de contrôle de même type dans les descriptifs chargés ;
- de création, par ledit dispositif de contrôle, d'une page agrégeant des fonctions de contrôle de même type suite à l'étape de reconnaissance ;
- de génération d'un affichage de ladite page agrégée.

Selon un aspect particulier de l'invention, le dispositif de contrôle analyse les descriptifs obtenus pour déterminer des fonctions similaires dans ces descriptifs, par exemple les réglages de volumes sonores, et crée des pages HTML qui regroupent ces fonctions. Cette caractéristique est susceptible d'être brevetée en elle-même.

Un avantage de l'invention est de permettre un contrôle centralisé de différents appareils fonctionnant en même temps.

D'autres caractéristiques et avantages de l'invention apparaîtront à la lecture de modes de réalisation de l'invention fait en référence aux figures ci-annexées parmi lesquelles :

- la figure 1 représente un système de contrôle d'équipements domestiques par affichage graphique sur écran selon un premier mode de réalisation de l'invention;
- la figure 2 représente une vue détaillée d'un équipement domestique particulier selon l'invention;
- la figure 3 représente un système de contrôle d'équipements domestiques par affichage graphique sur écran selon un deuxième mode de réalisation de l'invention;
- la figure 4 représente une amélioration des systèmes représentés aux figures 1 et 3.

Sur toutes les figures, les mêmes repères désignent les mêmes éléments.

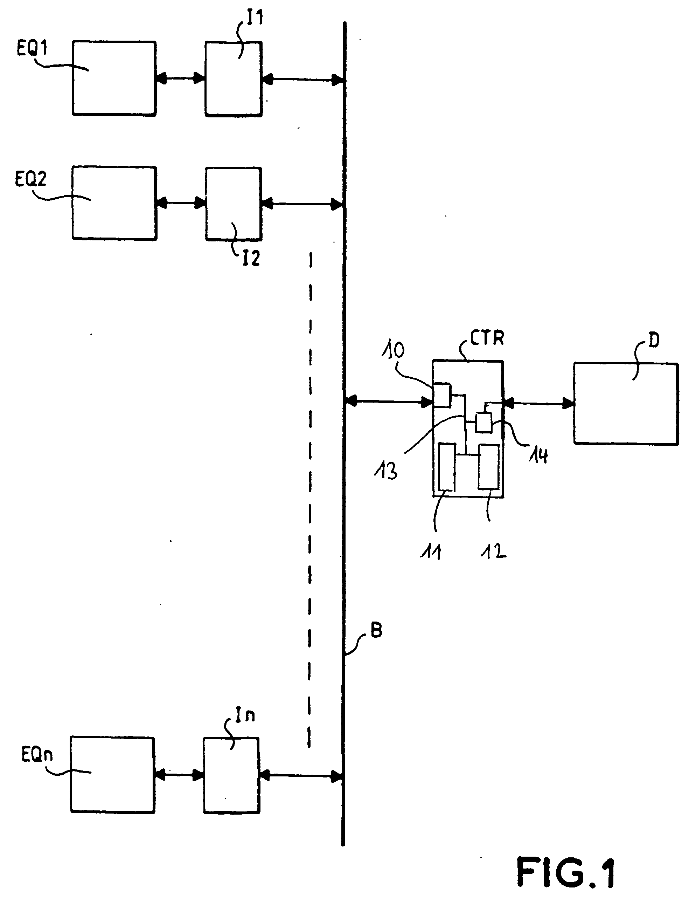

La figure 1 représente un système de contrôle d'équipements domestiques par affichage graphique sur écran selon un premier mode de réalisation de l'invention.

Le système représenté en figure 1 comprend n équipements domestiques EQ1, EQ2, ..., EQn, n étant un nombre entier supérieur ou égal à 1.

Chaque équipement domestique EQj (j = 1, 2, ..., n) est relié à une interface Ij. Selon un premier mode de réalisation de l'invention l'équipement domestique EQj et l'interface Ij sont des dispositifs autonomes reliés entre eux par une connexion. Selon un deuxième mode de réalisation de l'invention, l'interface Ij est intégrée à l'équipement domestique EQj de façon à ne constituer qu'un seul et même appareil.

Les différentes interfaces Ij sont reliées entre elles et à un dispositif de contrôle CTR par un réseau électrique B. Le dispositif de contrôle CTR est relié à un dispositif d'affichage D. Selon le mode de réalisation préférentiel de l'invention, le réseau électrique B est un bus de données tel que, par exemple, le bus défini par la norme IEEE 1394.

Le dispositif d'affichage D peut être, par exemple, un appareil de télévision ou encore un ordinateur de type PC (l'acronyme PC est issu de l'anglais "Personal Computer").

Pour chaque équipement domestique, les informations susceptibles d'être affichées sur l'écran du dispositif D sont, par exemple, tout ou partie des informations énumérées ci-après :

- Des informations permettant le réglage et le fonctionnement de l'équipement domestique. Ces informations sont susceptibles de varier d'un instant à l'autre, avec une fréquence plus ou moins grande. Elles sont issues de mesures instantanées effectuées, par exemple à intervalles de temps réguliers, sur l'appareil en fonctionnement. Il peut s'agir, par exemple, de l'information donnant le temps de lecture restant sur une plage de disque compact audio ou encore de l'information donnant la température d'un four électrique.
- Des informations de configuration. Ces informations précisent de quelle façon différents équipements domestiques peuvent être connectés entre eux. La présentation par affichage graphique de ces informations nécessite la connaissance des différents équipements domestiques à configurer afin que puissent être calculées la ou les configuration(s) choisie(s).
- Des informations techniques descriptives de l'équipement domestique. Ces informations ne sont pas susceptibles de changer au cours du temps. Elles sont généralement mentionnées dans un fascicule livré avec l'équipement. Il peut s'agir, par exemple, du numéro de série de l'appareil, de sa consommation électrique type, ou encore de son encombrement (hauteur, largeur, profondeur).

- Des informations décrivant le mode opératoire et les consignes de sécurité de l'appareil. Ces informations sont traditionnellement consignées dans le mode d'emploi de l'appareil.
- Des informations commerciales concernant le fabriquant et/ou le distributeur de l'appareil. Il peut s'agir, par exemple, de promotions commerciales ou encore de produits ou de services additionnels directement ou indirectement liés à l'appareil.

Ainsi, un avantage de l'invention est-il de permettre que soient tenues à disposition de l'utilisateur, à tout instant et de façon centralisée, un ensemble d'informations très variées tant au niveau d'un seul appareil qu'au niveau d'un ensemble d'appareils.

Selon l'invention, les informations mentionnées ci-dessus sont décrites, pour chaque équipement domestique, sous la forme d'un formulaire électronique dans le circuit d'interface Ij. Par formulaire électronique, il faut entendre un ensemble de données informatiques que l'interface Ij est susceptible de communiquer ainsi qu'un ensemble de circuits électroniques permettant la communication de ces données informatiques.

Dans la suite de la description, l'ensemble des données informatiques que l'interface Ij est susceptible de communiquer sera appelé descriptif de l'équipement domestique auquel est associé l'interface Ij.

Ainsi, un autre avantage de l'invention est-il de proposer un moyen électronique de stockage, de recherche et d'affichage des informations concernant les équipements domestiques.

Comme cela a été mentionné ci-dessus, le formulaire électronique contenu dans une interface Ij (j = 1, 2, ..., n) est constitué de données informatiques et de moyens permettant de stocker et de communiquer ces données informatiques.

Les moyens permettant de stocker et de communiquer les données informatiques peuvent être constitués seulement de circuits mémoire contenant les données. Ils peuvent également être constitués de circuits mémoire et d'un microprocesseur pour des applications plus complexes telles que, par exemple, la génération de documents résultant de l'exécution d'un programme.

Les données informatiques sont, en tout ou partie, constituées des données suivantes :

- un ensemble de pages et/ou de fractions de pages utilisant le langage de marquage utilisé pour la mise en forme des documents au sein du système hypermédia communément appelé la toile mondiale. Ce langage de marquage sera par la suite appelé langage HTML, l'acronyme HTML provenant de l'anglais "Hyper Text Mark-up Language". Ces pages contiennent alors les informations statiques concernant l'appareil, c'est-à-dire les données qui ne changent pas avec le temps, et des programmes qui permettent d'accéder à ces données tels que, par exemple, les programmes connus sous le nom de programme Java et programme JavaScript.
- un ensemble de déclarations, ou méta-informations, permettant l'agrégation, par le dispositif de contrôle CTR, de tout ou partie des fractions de pages. A titre d'exemple, les descriptifs de plusieurs appareils peuvent comporter chacun une fonction de réglage de volume, identifiée par un type de fonction particulier. Le contrôleur CTR peut alors constituer une seule page d'informations contenant tous les réglages de volume sonore des appareils concernés, par reconnaissance du type de fonction dans les descriptifs.
- un ensemble de programmes permettant la création de pages dynamiques ou la recherche d'informations dynamiques. A titre d'exemple, il peut s'agir de programmes connus au sein de la toile mondiale tel que le programme Java, le programme JavaScript, ou encore le programme CGI (l'acronyme CGI est issu de l'anglais "Common Gateway Interface).

Le nombre d'outils informatiques compatibles du langage HTML est très important. Avantageusement, il s'ensuit que la description des pages et fractions de pages utilisant le langage HTML peut être conçue avec une grande variété d'outils informatiques. A titre d'exemple, dans le cas d'une représentation des informations sous forme d'images, les standards communément appelés GIF, JPEG ou encore MPEG peuvent être utilisés pour coder les informations. Les acronymes GIF, JPEG et MPEG sont issus des expressions anglaises respectives "Graphic Interchange Format", "Joint Photographic Expert Group" et "Moving Picture Expert Group".

Le dispositif CTR est par exemple un décodeur numérique muni d'une interface IEEE 1394 (référence 10 de la figure 1) le reliant au bus de communication. Le décodeur est pourvu d'un microprocesseur 11 et de mémoire 12 pour le chargement, traitement et stockage des descriptifs et des programmes qui y sont contenus. Le microprocesseur, l'interface bus et la mémoire sont reliés à un bus interne 13. Le décodeur comporte également un générateur de caractères 14 pour la génération des graphismes nécessaires à l'affichage des interfaces utilisateur et des informations.

Le descriptif contenu dans l'interface Ij est communiqué au dispositif de contrôle CTR par l'intermédiaire du réseau B. Comme cela a été mentionné précédemment, selon le mode de réalisation préférentiel de l'invention, le réseau B est un bus de données tel que, par exemple, le bus défini par la norme IEEE 1394.

Selon un premier mode de réalisation de l'invention, la phase de communication au dispositif de contrôle CTR de tout ou partie du descriptif contenu dans une interface Ij se déroule dès que le raccordement de l'interface Ij au dispositif de contrôle CTR est effectué. A titre d'exemple, dans le cas de l'utilisation du bus de données défini par la norme IEEE 1394, cette phase de communication peut être réalisée lors du protocole automatique d'échanges de données qui s'effectue lors du branchement de l'interface Ij sur le bus.

Selon un autre mode de réalisation de l'invention, la phase de communication de tout ou partie du descriptif contenu dans l'interface Ij se déroule à la demande du dispositif de contrôle CTR et peut, si cela s'avère nécessaire, être effectuée plusieurs fois en suivant le même protocole.

La communication du descriptif contenu dans une interface Ij peut être réalisée par le protocole de communication utilisé pour les échanges de données entre clients et serveurs au sein de la toile mondiale. Ce protocole de communication sera par la suite appelé protocole HTTP, l'acronyme HTTP provenant de l'anglais "Hyper Text Transfer Protocol". Selon l'invention, cependant, d'autres protocoles de communication peuvent être utilisés. Par exemple, la phase de connexion d'un appareil au bus IEEE1394 comporte une phase d'échange de données qui peut être utilisée à cette fin.

Au sein du système hypermédia communément appelé la toile mondiale, le protocole HTTP utilise les services d'une pile de protocoles communément appelée pile TCP/IP (l'acronyme TCP/IP est issu de l'anglais "Transmission Control Protocol / Internet Protocol"). La pile de protocoles TCP/IP est relativement coûteuse à mettre en place. Un avantage de l'invention est de pouvoir utiliser comme support du protocole HTTP des protocoles différents des protocoles de la pile TCP/IP.

Lors de la communication de tout ou partie du descriptif d'une interface Ij au dispositif de contrôle CTR, ce dernier réalise l'insertion, dans son arborescence, de pages et/ou de fractions de pages au langage HTML. Par "arborescence" du dispositif de contrôle, il faut entendre l'ensemble des pages que le dispositif de contrôle permet de relier entre elles et d'afficher par activation d'un symbole graphique ou textuel.

Chaque page au langage HTML est identifiée par une adresse. Selon un premier mode de réalisation de l'invention, parmi les pages au langage HTML insérées dans l'arborescence du dispositif de contrôle, figure au moins une page d'en-tête contenant la liste des adresses des différentes pages. Cette page d'en-tête permet de retrouver, lors de sa consultation, une page HTML quelconque par l'intermédiaire de l'adresse de la page HTML.

Il est aussi possible, selon un autre mode de réalisation de l'invention, d'insérer dans l'arborescence du dispositif de contrôle une page HTML rassemblant une liste de pointeurs, chaque pointeur correspondant à une adresse de page HTML de description de l'appareil. La page HTML rassemblant la liste de pointeurs permet alors de retrouver, lors de sa consultation, une page HTML quelconque par l'intermédiaire du pointeur qui correspond à l'adresse de la page.

Avantageusement, la page HTML contenant la liste des adresses ou la page HTML rassemblant la liste des pointeurs permettent à l'utilisateur un accès facile aux différentes informations concernant les appareils utilisés. De plus, ces pages HTML peuvent être facilement modifiées. Il est alors possible de les mettre à jour, sans difficulté, lors du branchement d'un nouvel appareil sur le réseau B.

Il est aussi possible, selon l'invention, de créer une page faisant la liste des appareils branchés sur le réseau B. Un objet graphique constitué d'une ligne de texte et/ou d'un dessin peut alors être utilisé pour indiquer la présence d'un appareil, ce qui correspond à l'insertion de son descriptif dans l'arborescence du dispositif de contrôle. Cet objet graphique peut être utilisé pour guider l'utilisateur vers de nouvelles pages spécifiques concernant l'appareil. Cette page est avantageusement créée par le dispositif de contrôle à partir de l'ensemble des descriptifs chargés à partir des appareils.

L'utilisation du langage HTML présente l'avantage de permettre à l'utilisateur de choisir la représentation des informations qu'il désire afficher. Ainsi, par exemple, cette représentation pourra-t-elle être rendue homogène pour des informations de même nature telles que, par exemple, les informations concernant le niveau sonore de différents appareils ou les informations concernant la puissance consommée par différents appareils.

Selon un perfectionnement du mode de réalisation de l'invention, une interface Ij peut contenir un ensemble de déclarations permettant à l'appareil qui lui est associé d'être configuré comme source et/ou récepteur de données telles que, par exemple, des données audio et/ou vidéo.

Le dispositif de contrôle CTR comprend alors des moyens pour créer des pages de configuration permettant de déclarer quel appareil est utilisé et quelle est sa fonction (émetteur pour une première liste de signaux (audio, vidéo...) ou de données ou récepteur pour une seconde liste) ainsi que des pages proposant les connections possibles entre différents appareils ou fournissant à l'utilisateur un moyen lui permettant de spécifier la ou les connections qu'il désire établir entre différents appareils.

A titre d'exemple non limitatif, un appareil de télévision peut être déclaré comme émetteur de son et une chaîne haute fidélité comme récepteur de ce son. Le descriptif de l'appareil de télévision comporte alors une déclaration selon laquelle l'appareil peut être une source de son (et également une source de signaux vidéo, un récepteur de son et un récepteur de signaux vidéo...). Le dispositif de contrôle CTR peut alors construire une page de configuration décrivant cette situation.

Sous l'action d'un dispositif de commande tel que, par exemple, une télécommande, le dispositif de contrôle CTR permet avantageusement de commander l'ensemble des appareils domestiques reliés au réseau B.

La commande est déclenchée, de façon connue en soi, par une interaction de l'utilisateur avec un objet graphique (texte et/ou symbole) affiché sur l'écran du dispositif D.

Cette interaction est transformée en commande par un programme de commande stocké dans un circuit mémoire contenu dans le dispositif de contrôle. Selon le mode de réalisation préférentiel de l'invention, le langage du programme de commande est par exemple le langage Java. Selon d'autres modes de réalisation de l'invention, il peut aussi s'agir d'un langage de commande différent de l'un des langages de commande connus au sein de la toile mondiale. Il peut alors s'agir, par exemple, d'une extension du langage HTML. Par extension du langage HTML, il faut entendre le rajout au langage HTML de certains mots clefs dont la syntaxe d'usage est conforme à la syntaxe usuelle du langage HTML.

Selon le présent exemple de réalisation, la syntaxe suivante est définie pour préciser une fonction de réglage de volume:

<COMMAND MIN=0, MAX=100, DELTA=1, LABEL='Volume',

PROTOCOL = 'AV/C CTS', IDENT='MON IDENTIFICATEUR'>

où 'COMMAND' désigne le type de fonction, à savoir une commande, MIN et MA définissent respectivement les valeurs minimale et maximale du réglage, DELTA définit l'incrément, LABEL définit le nom à donner à la fonction, PROTOCOL définit le protocole utilisé pour commander l'appareil en cause et IDENT définit un identificateur de l'appareil qui appelle la fonction.

D'autre part, le langage JavaScript peut être utilisé pour écrire le programme d'interaction avec l'utilisateur.

Utiliser une extension du langage HTML pour prendre en compte tout ou partie des commandes de réglage des appareils reliés au réseau B permet avantageusement d'homogénéiser les symboles représentant des commandes de même nature. La commande d'appareils différents se trouve ainsi simplifiée.

Initialement, le programme de commande d'un appareil domestique est contenu dans l'interface qui lui est associée. Lors de la communication du descriptif au dispositif de contrôle CTR, le programme de commande est chargé dans le dispositif de contrôle qui est alors en mesure de l'exécuter.

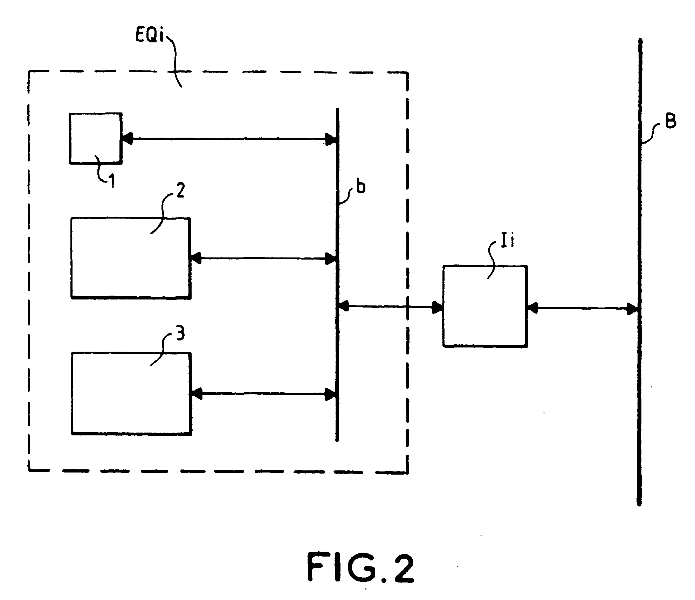

La figure 2 représente une vue détaillée d'un équipement domestique particulier selon l'invention.

L'élément représenté en figure 2 est constitué d'un équipement domestique EQi et d'une interface li associée à l'équipement domestique EQi.

A titre d'exemple non limitatif, l'équipement domestique EQi comprend trois appareils électriques 1, 2, 3 tels que ceux mentionnés précédemment. De façon plus générale, cependant, l'équipement domestique EQi comprend au moins un appareil électrique.

Les appareils électriques 1, 2, 3 sont reliés par l'intermédiaire d'un réseau électrique b à l'interface li. Le réseau électrique b peut être constitué, par exemple, par un ensemble de fils électriques.

L'interface li contient l'ensemble des descriptifs des appareils 1, 2, 3 ainsi que différents circuits permettant de convertir les données qui transitent sur le réseau B en grandeurs compatibles des appareils électriques.

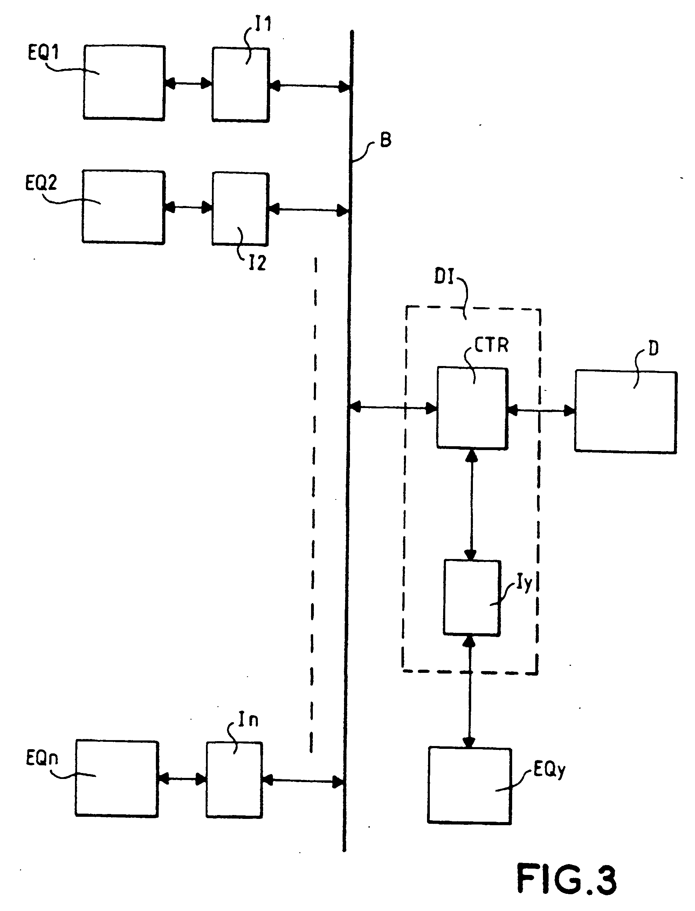

La figure 3 représente un système de contrôle d'équipements domestiques par affichage graphique sur écran selon un deuxième mode de réalisation de l'invention.

En plus des éléments mentionnés en figure 1, le système de contrôle de la figure 3 comprend un équipement domestique EQy et une interface ly.

L'équipement domestique EQy est constitué d'au moins un appareil électrique tel que ceux mentionnés précédemment. L'interface ly contient l'ensemble des descriptifs des appareils électriques qui constituent l'équipement domestique EQy.

L'interface ly est alors reliée directement au dispositif de contrôle CTR par des fils électriques. Selon ce mode de réalisation de l'invention, les informations échangées entre les appareils électriques constituant l'équipement EQy et le dispositif de contrôle CTR ne transitent plus par le réseau B.

Ce mode de réalisation peut être particulièrement avantageux pour certains appareils électriques particulièrement simples tels que, par exemple, des interrupteurs, car il n'est alors pas nécessaire de convertir des grandeurs électriques simples telles qu'une valeur de tension ou une valeur de courant en données compatibles du réseau B.

Selon un mode de réalisation particulier, l'interface ly et le dispositif de contrôle CTR peuvent alors être intégrés dans un seul dispositif DI.

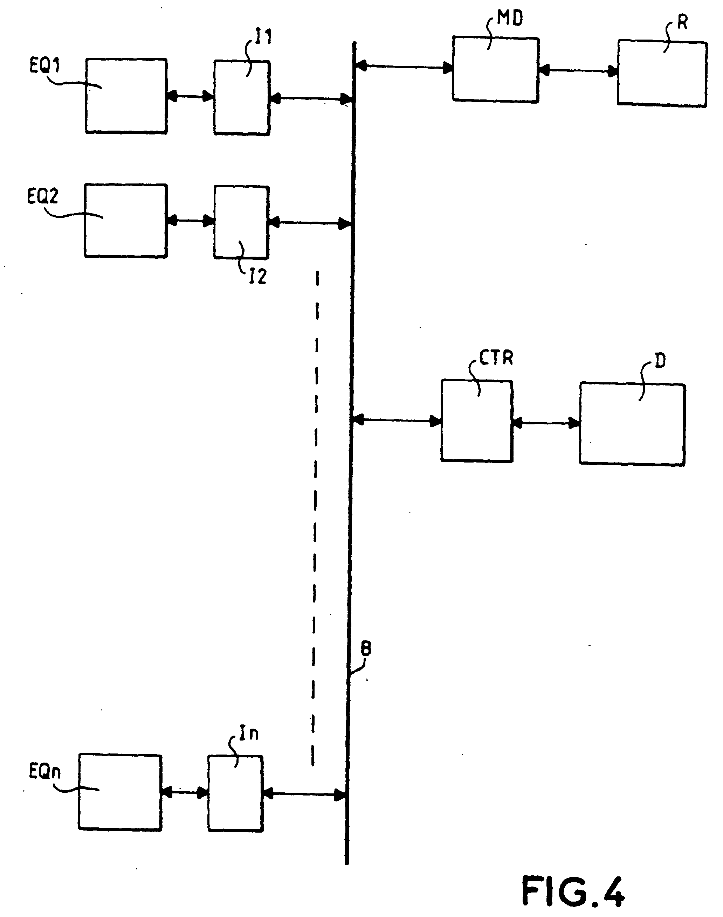

La figure 4 représente une amélioration du système représenté aux figures 1 et 3.

En plus des éléments décrits en figure 1, le système de la figure 4 comprend un modem MD relié, d'une part, au bus B et, d'autre part, à un réseau R extérieur à l'ensemble que constituent les équipements domestiques EQj, les interfaces lj, le réseau B, le dispositif de contrôle CTR et le dispositif d'affichage D. Le réseau R peut être, par exemple, un réseau téléphonique.

Selon le mode de réalisation préférentiel de l'amélioration représentée en figure 4, la communication de tout ou partie du descriptif d'au moins un équipement domestique est réalisée par l'intermédiaire d'une référence communément utilisée au sein de la toile mondiale pour spécifier la localisation physique d'un fichier ou d'une ressource. Cette référence sera par la suite notée URL (l'acronyme URL provient de l'anglais "Uniform Resource Locator").

Le dispositif de contrôle peut alors aller chercher le document voulu à l'endroit indiqué via le modem MD et le réseau R par l'intermédiaire de l'URL. Lors de cette opération différents protocoles tels que, par exemple, les protocoles HTTP, BOOTP, FTP et TFTP peuvent être utilisés. Les acronymes BOOTP, FTP, et TFTP proviennent respectivement des expressions anglaises "Boot Protocol", "File Transfer Protocol" et "Trivial File Transfer Protocol".

Le protocole HTTP est un protocole relativement coûteux. Avantageusement, il n'est pas obligatoire que la phase de communication de descriptif telle que mentionnée ci-dessus s'effectue selon le protocole HTTP.

Un autre avantage du mode de réalisation représenté en figure 4 est la mise à jour des informations d'un ou de plusieurs descriptifs d'équipements domestiques par l'intermédiaire du modem MD relié au réseau R. Avantageusement, de nouvelles informations concernant des équipements domestiques peuvent être ainsi rendues accessibles à l'utilisateur. Cette fonctionnalité de mise à jour est particulièrement utile, par exemple, dans le cas des informations commerciales telles que celles mentionnées plus haut, ou encore dans le cas d'informations concernant la sécurité de l'appareil.

Le modem représenté en figure 4 est un dispositif en soi, séparé des autres équipements. L'invention concerne également d'autres configurations telles que, par exemple, celles où le modem est contenu dans un répondeur téléphonique ou dans un terminal permettant l'accès au système hypermédia que constitue le toile mondiale.

## Revendications

1. Dispositif de contrôle (CTR) dans un réseau d'appareils domestiques (EQn) **caractérisé en ce qu'**à chaque appareil est associé un descriptif composé d'un ensemble de pages ou de fractions de pages de langage de marquage comportant des fonctions de contrôle dudit appareil, ledit dispositif comportant

   - des moyens (10, 11, 12, 13) de chargement et de traitement de descriptifs associés aux appareils ;
   - des moyens (11, 12, 13) d'agrégation de fonctions de contrôle de même type de plusieurs descriptifs par reconnaissance des types de fonctions dans les descriptifs pour affichage des fonctions agrégées sur une seule page ou pour l'agrégation de plusieurs fractions de pages pour affichage des fractions de pages agrégées sur une seule page ;
   - un générateur (14) des graphismes nécessaires pour l'affichage des pages ou des fractions de pages agrégées.

2. Dispositif selon la revendication 1; **caractérisé en ce qu'**un descriptif est chargé directement à partir de l'appareil auquel il est associé, ledit descriptif étant stocké dans une mémoire de cet appareil.

3. Dispositif selon la revendication 1 ou 2, **caractérisé en ce qu'**un descriptif est chargé à partir d'un serveur Internet, l'adresse du descriptif étant chargée à partir de l'appareil auquel le descriptif est associé.

4. Dispositif selon l'une des revendications 1 à 3, **caractérisé en ce qu'**il comporte des moyens de création d'au moins une page de configuration d'appareils en tant que source et/ou récepteur de signaux pour permettre à l'utilisateur de spécifier les connexions entre appareils.

5. Dispositif selon l'une des revendications 1 à 4, **caractérisé en ce qu'**un descriptif comporte au moins l'une des fonctions suivantes: affichage d'informations statiques relatives à l'appareil, affichage d'informations dynamiques relatives à l'appareil, affichage d'un objet pour la commande d'une fonction de l'appareil.

6. Dispositif selon la revendication 5, **caractérisé en ce que** lorsqu'un descriptif comporte un objet pour la commande d'une fonction d'un appareil, il comporte également un programme pour élaborer la commande correspondante à transmettre à l'appareil auquel est associe l'ensemble.

7. Dispositif selon l'une des revendications 1 à 6, **caractérisé en ce que** ledit dispositif indique dans la ou les pages de configuration l'ensemble des configurations possibles.

8. Procédé de contrôle d'au moins un appareil (EQn) dans un réseau de communication domestique comportant un dispositif de contrôle (CTR) relié à un dispositif d'affichage, **caractérisé en ce qu'**à chaque appareil est associé un descriptif composé d'un ensemble de pages ou de fractions de pages de langage de marquage pour contrôler ledit appareil, le procédé comportant les étapes:

- de chargement, par ledit dispositif de contrôle (CTR), de descriptifs d'une pluralité d'appareils,
- de reconnaissance de fonctions de contrôle de même type dans les descriptifs chargés ;
- de création, par ledit dispositif de contrôle, d'une page agrégeant des fonctions de contrôle de même type suite à l'étape de reconnaissance ;
- de génération d'un affichage de ladite page agrégée.

9. Procédé selon la revendication 8, **caractérisé en ce que** le descriptif d'un appareil est chargé directement à partir de cet appareil ou à partir d'un serveur, l'adresse du descriptif étant fournie par l'appareil.

**Patentansprüche**

1. Kontrollvorrichtung (CTR)in einem Netzwerk für Haushaltsgeräte (EQn)
   **dadurch gekennzeichnet, dass**
   jedem Gerät eine Spezifikation zugeordnet ist, die sich aus einer Gesamtheit von Seiten oder einem Teil von Seiten in einer Kennzeichnungssprache zusammensetzt und die Steuerfunktionen der Geräte beinhalten, die Vorrichtung beinhaltet

   - Mittel (10, 11, 12, 13) zum Laden und Bearbeiten der den Geräten zugehörigen Spezifikationen;
   - Mittel (11, 12, 13) der Zusammenführung von Steuerfunktionen der gleichen Art in mehreren Spezifikationen, durch Erkennung der Funktionsarten in dern Spezifikationen, um die zusammengeführten Funktionen auf einer einzigen Seite darzustellen, oder zur Zusammenführung mehrerer Seitenteile zur Darstellung von zusammengeführten Seitenteilen auf einer einzigen Seite;
   - einen Zeichengenerator (14) mit den notwendigen Zeichen, um die verbundenen Seiten oder Teile von Seiten darzustellen.

2. Vorrichtung gemäß Anspruch 1
   **dadurch gekennzeichnet, dass**
   eine dem Gerät zugehörige Spezifikation direkt vom Gerät aus gespeichert wird, diese Spezifikation wird im Speicher des Gerätes abgelegt.

3. Vorrichtung gemäß Anspruch 1 oder 2
   **dadurch gekennzeichnet, dass**
   eine Spezifikation von einem Server im Internet herunter geladen wird, die Adresse der Spezifikation wird vom Gerät geladen zu dem die Spezifikation gehört.

4. Vorrichtung gemäß einem der Ansprüche 1 bis 3
   **dadurch gekennzeichnet, dass**
   sie Mittel beinhaltet, die es zulassen, dass zumindest eine Seite mit Konfigurationseinstellungen bezüglich der Quellen und / oder Signalempfänger erstellt wird, damit der Benutzer die Verbindungen innerhalb der Geräte spezifizieren kann.

5. Vorrichtung gemäß einem der Ansprüche 1 bis 4
   **dadurch gekennzeichnet, dass**
   eine Spezifikation mindestens eine der folgenden Funktionen beinhaltet: Anzeige statischer Informationen in Bezug auf ein Gerät, Anzeige dynamischer Informationen in Bezug auf ein Gerät, Anzeige eines Objektes zur Steuerung einer Funktion des Gerätes.

6. Vorrichtung gemäß Anspruch 5
   **dadurch gekennzeichnet, dass**
   wenn eine Spezifikation ein Objekt zur Steuerung einer Gerätefunktion beinhaltet, es auch ein Programm zur Ausarbeitung des entsprechenden Befehls beinhaltet, der zu dem Gerät gesendet werden soll, zu der die Spezifikation gehört.

7. Vorrichtung gemäß einem der Ansprüche 1 bis 6

**EP 1 023 796 B1**

**dadurch gekennzeichnet, dass**
die Vorrichtung auf der, oder den, Seite(n) die Gesamtheit aller möglichen Zusammenschaltungen anzeigt.

8. Steuerungsverfahren von mindestens einem Gerät (EQn) in einem Heimnetzwerk, welches ein Steuerungsanlage (CTR) enthält, die mit einer Anzeige verbunden ist und
**dadurch gekennzeichnet ist, dass**
zu jedem Gerät eine Spezifikation gehört, die sich aus einer Gesamtheit von Seiten oder einem Teil von Seiten in Kennzeichnungssprache zur Steuerung der Geräte zusammensetzt wobei das Verfahren die folgenden Schritte beinhaltet:

- Ladung der Spezifikationen einer Mehrzahl von Geräten durch die Steuerungsvorrichtung (CTR);
- Erkennung der Steuerfunktionen der gleichen Art in den geladenen Spezifikationen;
- Erstellung einer Seite mit den zusammengeführten Steuerfunktionen desselben Typs nach dem Erkennungsschritt,
- Erstellung einer Anzeige dieser zusammenführenden Seite mit den.

9. Vorrichtung gemäß des Anspruchs 8
**dadurch gekennzeichnet, dass**
die Spezifikation eines Gerätes direkt von diesem aus geladen werden kann, oder aber auch von einem Server, wobei die Adresse dafür vom Gerät selbst geliefert wird.

**Claims**

1. Control device (CTR) in a home network including a plurality of domestic apparatuses (EQn), **characterized in that** with each apparatus is associated a descriptor composed of a set of marking language pages or page fractions comprising control functions of said apparatus, said device comprising

 - means (10, 11, 12, 13) for loading and processing descriptors associated with the apparatusses;
 - means (11, 12, 13) for aggregating control functions of a same type from several descriptors by recognizing function types in the descriptors for displaying the aggregated functions on one single page or for aggregating several page fractions for displaying of page fractions aggregated on a single page;
 - a graphics generator (14) of the graphics necessary for displaying of the aggregated pages or page fractions.

2. Device according to claim 1, **characterized in that** a descriptor is loaded directly from the apparatus with which it is associated, said descriptor being stored in a memory of that apparatus.

3. Method according to claim 1, wherein a descriptor is loaded from an internet server, the address of the descriptor being loaded from the apparatus associated with the descriptor.

4. Device according to one of the claims 1 to 3, **characterized in that** it comprises means for creating at least one apparatus configuration page as source and /or receiver of signals for enabling the user to specify the connections between apparatuses.

5. Device according to one of the claims 1 to 4, wherein a descriptor contains at least one of the following functions: display of static information relating to the apparatus, display of dynamic information relating to the apparatus, display of an object for controlling a function of the apparatus.

6. Device according to claim 5, **characterized in**, when a descriptor contains an object for controlling a function of an apparatus, it also contains a program for generating the corresponding command to be transmitted to the apparatus with which the set is associated.

7. Device according to one of the claims 1 to 6, **characterized in that** said device indicates in the configuration page or pages the set of possible connections.

8. Method of controlling at least one apparatus (EQn) in a domestic communication network having a control device (CTR) connected to a display device, **characterized in that** to each apparatus is associated a descriptor composed of a set of marking language pages or page fractions for controlling said apparatus, the method comprising the steps of:

- loading, by said control device (CTR), of descriptors from a plurality of apparatuses,
- recognition of control functions of the same type in the loaded descriptors;
- creation, by said control device, of a page aggregating the control functions of the same type following the recognition step;
- generation of a display of said aggregated page.

9.  Method according to claim 8, **characterized in that** the descriptor of an apparatus is loaded directly from that apparatus or from a server, the address of the descriptor being provided by the apparatus.

FIG.1

FIG.2

FIG.3

FIG.4